# EUROPEAN PATENT APPLICATION

(11) **EP 4 640 529 A1**
(43) Date of publication of application: **29.10.2025**
(21) Application number: 23907641.7
(22) Date of filing: 15.12.2023
(51) Int. Cl.: B62D 21/15, B62D 21/11

(54) **ELECTRIC VEHICLE BODY STRUCTURE**

(30) Priority: 21.12.2022 KR 20220180573
(71) Applicant: POSCO Co., Ltd, Pohang-si, Gyeongsangbuk-do 37859 (KR)
(72) Inventor: LEE, Hong-Woo, Incheon 21985 (KR); LEE, Gyu-Min, Incheon 21985 (KR); KIM, Jaehyun, Incheon 21985 (KR); KIM, Hwi-Geon, Incheon 21985 (KR)
(74) Representative: Meissner Bolte Partnerschaft mbB
(86) International application number: PCT/KR2023/020833
(87) International publication number: WO 2024/136356

(57) **Abstract**

The present invention relates to an electric vehicle body structure comprising: a battery frame encompassing a battery area that includes batteries; and a front frame provided, on the battery frame, at the front side of the vehicle, wherein the front frame includes: a first subframe connected to the battery frame; a second subframe branched from the first subframe and inclined outward in the width direction of the vehicle; and a third subframe extending farther than the branch point of the second subframe from the first subframe at the front of the vehicle.

## Description

### Technical Field

The present disclosure relates to an electric vehicle body structure, and more particularly, to an electric vehicle body structure having a front frame which absorbs impacts to the maximum extent and is lightweight in response to a frontal collision of the vehicle.

### Background Art

In general, a vehicle having a body on a frame structure has a vehicle body structure formed by assembling a frame, forming a lower portion thereof, and a vehicle body, including a passenger compartment.

In the case of an electric vehicle, unlike the conventional vehicle body structure, it is common that a battery is disposed in an internal space of the frame. When the electric vehicle is provided with a battery, a typical body-on-frame vehicle body structure would have difficulty in protecting the battery in a collision unless having additional reinforcement.

In addition, a cabin supports a driver's seat, so a driver of a vehicle body enters the cabin and controls the vehicle while sitting in the driver's seat.

Therefore, in order to ensure driver safety and prevent the frame from being deformed into the battery region in the event of a frontal collision of the vehicle body, the impact should be properly distributed to a plurality of components of the frame, and a front frame located at the front of the vehicle should absorb as much energy as possible.

In addition, since the weight of the battery increases the weight of the entire vehicle, the vehicle body needs to be designed so as not to be heavy.

To ensure the reliability of parts and vehicles in case of a vehicle collision, a crash test is being conducted using a frontal crash evaluation method.

A full frontal crash test is conducted by crashing a vehicle into a completely fixed wall at a speed of 48 km/h or 56 km/h, as per test regulations.

A partial frontal crash test is a test which crashes a portion (40%) of the front of the vehicle into a fixed wall at 64 km/h. While the full frontal crash test is performed with two front side members, the partial frontal crash test is performed with one front side member.

A small overlap crash test is a test which crashes a very small portion (25%) of the front of the vehicle into a fixed wall at 64 km/h. The small overlap crash test is a method to verify the reliability of a vehicle in a collision by moving aside the most of the front side members and usually inserting a structure connected to the front side members to respond or moving aside the same in the event of a collision and transmitting minimal impacts to the passengers.

As described above, there is a need for an electric vehicle body structure that can effectively respond to collisions in a frontal crash test and solve the problems described above.

(Patent Document 1) Korean Patent No. 10-0352279 (August 28, 2002)

### Summary of Invention

### Technical Problem

The present disclosure is intended to solve the above-described problems, and an aspect of the present disclosure is to provide a lightweight electric vehicle body structure that can protect a battery frame by absorbing as much of a frontal collision of the vehicle as possible.

### Solution to Problem

In order to achieve the above-described purpose, in the present disclosure, provided is an electric vehicle body structure formed as follows.

According to an embodiment of the present disclosure, an electric vehicle body structure includes a battery frame formed to encompass a battery region including a battery; and a front frame provided on the battery frame at the front side of a vehicle, wherein the front frame includes a first subframe connected to the battery frame, a second subframe branched from the first subframe and inclined outwardly in a width direction of the vehicle; and a third subframe extending farther than a branch point of the second subframe from the first subframe at the front of the vehicle.

The second subframe and the third subframe may be located in the same position in a height direction of the vehicle.

A cross-section of the second subframe or the third subframe may include a plurality of closed cross-sections.

The second subframe includes a first side member extending in a longitudinal direction of the vehicle and including a first groove formed in a width direction of the vehicle, and a second side member extending in the longitudinal direction of the vehicle and coupled to the first side member to form a closed cross-section, and including a second groove formed in the width direction of the vehicle toward the closed cross-section, wherein the first groove and the above second groove may be in contact with each other.

The first side member may be provided outwardly of the second side member in the width direction, a first flat portion, parallel to the second side member may be formed, and the shortest distance of the first groove from the first flat portion in the width direction may increase toward the front of the vehicle.

The third subframe may have a polygonal cross-sectional structure, symmetrical in the height direction of the vehicle.

The third subframe may further include a reinforcing portion crossing the closed cross-section.

The third subframe may include a first auxiliary member disposed at an end of the vehicle in the height direction, and a second auxiliary member coupled to the first auxiliary member and having a contact portion in contact with at least one surface thereof formed.

The third subframe may include an outer member having a hollow space formed therein and provided integrally.

The third subframe may further include a mounting bracket coupled to the first subframe and a spring upper sheet coupled to the mounting bracket.

A strength of the first subframe may be greater than strengths of the second subframe and the third subframe, and a thickness of the first subframe may be thicker than thicknesses of the second subframe and the third subframe.

### Advantageous Effects of Invention

As set forth above, in the present disclosure, through the structure described above, energy absorption in a frontal collision may be maximized, passengers and batteries may be protected, and the weight of a vehicle body itself may be reduced.

### Brief description of drawings

FIG. 1 is a perspective view of an electric vehicle body structure according to an embodiment of the present disclosure.
FIG. 2 is a view of a front frame according to an embodiment of the present disclosure, when viewed from a height direction of the vehicle.
FIG. 3 is a view of a front frame according to an embodiment of the present disclosure, when viewed from a side direction of the vehicle.
FIG. 4 is a cross-sectional view illustrating a cross-section of a second subframe cut along the lines A-A', B-B', and C-C' shown in FIG. 2.
FIG. 5 is a cross-sectional view of a third subframe according to an embodiment of the present disclosure.
FIG. 6 is a cross-sectional view of a third subframe according to another embodiment of the present disclosure.
FIG. 7 is a cross-sectional view of a third subframe according to another embodiment of the present disclosure.

### Mode for Invention

Hereinafter, specific embodiments of the present disclosure will be described with reference to the attached drawings. However, the spirit of the present disclosure is not limited to the presented embodiments, and other regressive inventions or other embodiments included in the spirit of the present disclosure may be easily suggested by a person skilled in the art who understands the spirit of the present disclosure by adding, changing, or deleting other components within the scope of the same spirit, but it will also be said to be included within the scope of the present disclosure.

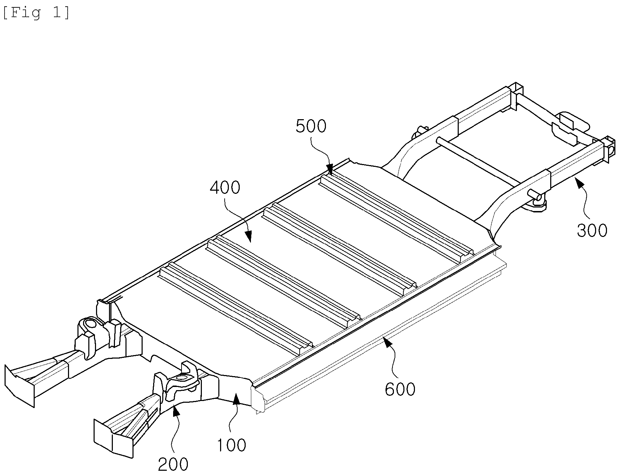

FIG. 1 is a perspective view of an electric vehicle body structure according to an embodiment of the present disclosure.

An electric vehicle body structure according to an embodiment of the present disclosure includes a battery frame 100 and a front frame 200.

The battery frame 100 may be formed to surround a battery region in which a battery is provided. The shape of the battery frame 100 is not limited, and includes all frames surrounding the battery region. Since the battery is located inside the battery frame 100, the battery frame 100 may play a role in protecting the battery from external impacts, and protecting the internal battery from being affected by external substances such as water.

A front frame 200 may be provided on the battery frame 100 at the front side of the vehicle. When an external force is applied from the front of the vehicle, the front frame 200 may be configured to absorb impacts as much as possible, to minimize impact force transmitted to the battery frame 100 therebelow.

For example, the front frame 200 may be configured to include a steel material. The front frame 200 may formed of a steel material to maximize the ability to absorb collision energy due to frontal impacts, and to reduce the weight.

In addition, the electric vehicle body structure of the present disclosure may further include a side sill 600 provided on the battery frame 100, a floor 400 covering at least one surface of the battery frame 100, a cross member 500 coupled to the floor 400 and disposed parallel in a width direction of the vehicle, and a rear frame 300 coupled to the battery frame 100 and located at the rear side of the vehicle.

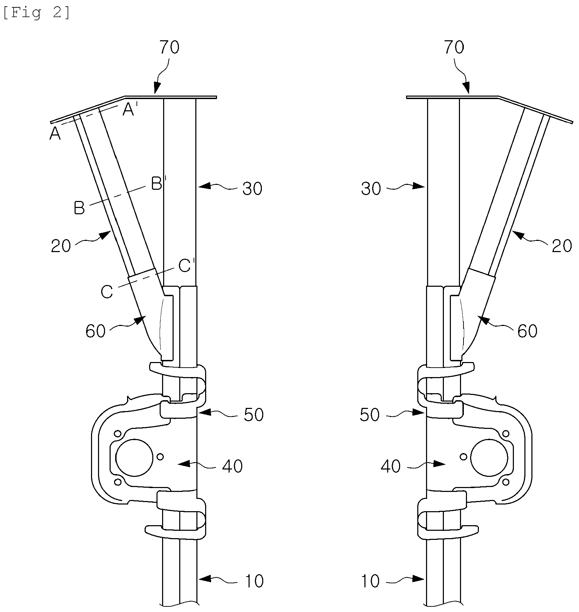

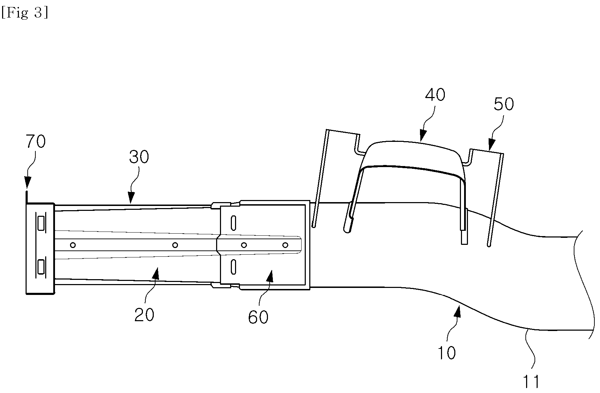

FIG. 2 illustrates a front frame according to an embodiment of the present disclosure when viewed from a height direction of the vehicle, and FIG. 3 illustrates the front frame when viewed from a width direction of the vehicle and viewed from the outside toward the inside of the vehicle.

The front frame 200 may include a first subframe 10, a second subframe 20, and a third subframe 30.

The first subframe 10 may be connected to the battery frame 100. The first subframe 10 may be coupled to the battery frame 100 through an additional member such as a coupling member, or may be coupled thereto integrally through direct welding, or the like.

According to an embodiment of the present disclosure, the first subframe 10 may be formed to be bent to a certain extent. It is easy for a folding phenomenon to occur in the curved portion, and therefore, when a folding phenomenon occurs in that portion due to an external impact, deformation which intrudes into the battery frame 100 may be reduced, and energy can be absorbed while being folded at that location. Accordingly, since the first subframe 10 has a curved portion, the first subframe 10 may provide the effect of increasing energy absorption capacity.

The second subframe 20 may be branched from the first subframe 10 and may be inclined outwardly in the with direction of the vehicle.

For example, the second subframe 20 may be coupled thereto through a connection member 60, at a point branched from the first subframe 10. The second subframe 20 may be branched from the first subframe 10, and may further include a connection member 60 to facilitate connection in the branched portion. The second subframe 20 may be coupled to the connection member 60, so that strength may be supplemented in this portion.

The second subframe 20 provides an effect that can minimize deformation of the first subframe 10.

The third subframe 30 may be formed from the front of the vehicle rather than the branch point of the second subframe 20, and may extend from the first subframe 10.

The third subframe 30 may be connected to one end of the first subframe 10 and may be formed to extend continuously in a straight line in a direction in which one end of the first subframe 10 was formed.

For example, the second subframe 20 and the third subframe 30 may be coupled to an end plate 70 at one end thereof, respectively, and an external force received by the second subframe 20 and the third subframe 30 may be stably distributed and transmitted by the end plate 70.

The end plate 70 may be formed with a bent portion in one portion, and an angle of the external force applied to the end plate 70 depending on the bent portion may be transmitted in the same direction as an axis of the second subframe 20 or the third subframe 30, thereby helping to maximize absorption in an axial direction.

In a full frontal crash test and a partial frontal crash test, the absorption of external collisions may be maximized by the third subframe 30 as the third subframe 30 collapses in the axial direction of the third subframe 30, and the second subframe 20 may provide a complementary effect by auxiliarily absorbing some energy.

In a small overlap crash test, energy absorption may be maximized as the second subframe 20 collapses in the axial direction of the second subframe 20, and the third subframe 30 may supplement energy absorption by auxiliary being subjected to bending deformation.

With the effects described above, even in the case that an external impact is applied from any direction on the front surface, energy absorption may be maximized by the second subframe 20 and the third subframe 30, and as a result, energy transferred to the first subframe 10 may be minimized, thereby minimizing deformation of the first subframe 10 and the battery frame 100.

When the absorption of collision energy in the second subframe 20 and the third subframe 30 is maximized, a collision load transferred to the first subframe 10 may be reduced, so that the first subframe 10 may be configured without additional weight increase due to a change in a shape, such as an increase in a thickness, or a change in a material, thereby providing the effects of weight reduction.

According to an embodiment of the present disclosure, the second subframe 20 and the third subframe 30 may be disposed in the same position in a height direction of the vehicle.

The positions of the second subframe 20 and the third subframe 30 in the height direction of the vehicle may be the same. Therefore, the second subframe 20 and the third subframe 30 may be located at the same height as one end thereof connected to the first subframe 10, and the collision energy may not be concentrated on a specific portion, but may be transferred to the second subframe 20 and the third subframe 30 and absorbed.

According to an embodiment of the present disclosure, a strength of the first subframe 10 may be greater than strengths of the second subframe 20 and the third subframe 30. Alternatively, a thickness of the first subframe 10 may be formed thicker than thicknesses of the second subframe 20 and the third subframe 30.

In order for the first subframe 10 to minimize an amount of deformation of the first subframe 10, and for the second subframe 20 and the third subframe 30 to absorb as much impact energy as possible when deformation occurs in the second subframe 20 and the third subframe 30, the strength of the first subframe 10 may be formed to be greater than the strengths of the second subframe 20 and the third subframe 30.

In addition, in order for the first subframe 10 to minimize the amount of deformation of the first subframe 10, and for the second subframe 20 and the third subframe 30 to absorb as much impact energy as possible when deformation occurs in the second subframe 20 and the third subframe 30, the thickness of the first subframe 10 may be thicker than the thicknesses of the second subframe 20 and the third subframe 30.

In addition, the first subframe 10 may be formed to be larger in both strength and thickness than the second subframe 20 and the third subframe 30.

According to an embodiment of the present disclosure, the front frame 200 may further include a mounting bracket 50 coupled to the first subframe 10 and a spring upper sheet 40 coupled to the mounting bracket 50.

The front frame 200 may further include a mounting bracket 50 and a spring upper seat 40 coupled to the mounting bracket 50.

The mounting bracket 50 may be formed with an upper arm located high in a height direction of the vehicle of the first subframe 10, and may be coupled to the first subframe 10. The spring upper seat 40 may be coupled to the first subframe 10 through the mounting bracket 50, and provides an effect of alleviating the impact received by a vehicle body by using a spring.

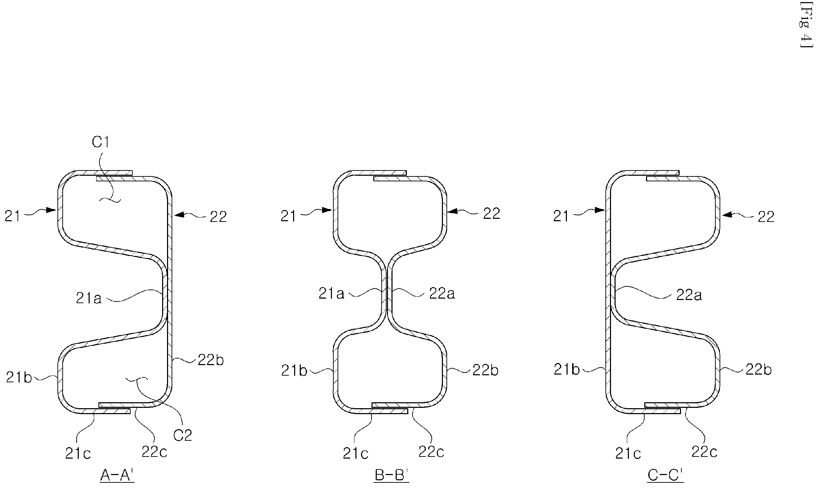

FIG. 4 is a cross-section of a second subframe according to an embodiment of the present disclosure, cut in a width direction of a vehicle, showing cross-sections for points A-A', B-B', and C-C' shown in FIG. 2.

The second subframe 20 according to an embodiment of the present disclosure may have a cross-section including a plurality of closed cross-sections.

A cross-section of the second subframe 20 cut parallel to the width direction of the vehicle may include a plurality of closed cross-sections C1 and C2. The second subframe 20 may be configured with a hollow interior thereof, so that the weight may be reduced and deformation may be induced in a certain direction, thereby preventing damage to other members due to unexpected deformation.

For example, the second subframe 20 may include a first side member 21 and a second side member 22.

The first side member 21 and the second side member 22 may be coupled at both ends in the height direction of the vehicle, and a plurality of closed cross-sections may be formed inside in the state in which the first side member 21 and the second side member 22 are coupled.

The first side member 21 may extend in a longitudinal direction of the vehicle and include a first groove 21a formed in a width direction of the vehicle. The first side member 21 may have a first flange 21c, bent in the same direction as a direction in which the first groove 21a is indented at both ends in a height direction of the vehicle formed therein. In addition, a first flat portion 21b with a certain length in the height direction of the vehicle may be formed, and the first side member 21 may include a first groove 21a in a portion of the first flat portion 21b.

The second side member 22 may extend in the longitudinal direction of the vehicle and be coupled to the first side member 21 to form a closed cross-section, and may include a second groove 22a formed in the width direction of the vehicle toward the closed cross-section. The second side member may have a second flange 22c, bent in the same direction as a direction in which the second groove 22a is indented at both ends in the height direction of the vehicle. The second side member 22 may include a second flat portion 22b parallel to the first flat portion 21b, and may have a second groove 22a by being indented in a portion of the second flat portion 22b in an outward direction of the width of the vehicle.

The first side member 21 and the second side member 22 may be joined at the first flange 21c and the second flange 22c, and the first groove 21a and the second groove 22a may be located to be in contact with each other.

A depth at which each of the first groove 21a and the second groove 22a is indented may vary in the longitudinal direction of the vehicle. However, the first groove 21a and the second groove 22a may extend in the longitudinal direction of the vehicle, and the first groove 21a and the second groove 22a may always be in contact with each other at different points in the longitudinal direction of the vehicle.

Therefore, a closed cross-section can be formed up and down in the height direction of the vehicle based on the portion in which the first groove 21a and the second groove 22a contact each other.

In addition, the first side member 21 may be provided outwardly of the second side member 22 in the width direction, a first flat portion parallel to the second side member 22 may be formed, and the shortest distance from the first flat portion 21b to the first groove 21a in the width direction may be formed to increase toward the front of the vehicle.

The first side member 21 may be formed closer to the outside of the vehicle in the width direction of the vehicle than the second side member 22, and the first groove 21a may be formed by being indented into the first side member 21 the most in the front portion of the vehicle, and an amount of indentation in the first groove 21a decreases toward the portion connected to the first subframe 10, so that the amount of indentation in the first groove 21a is zero in the portion connected to the first subframe 10, and may be flat.

The second side member 22 may be provided inwardly of the second side member 22 in the width direction, a second flat surface 22b parallel to the first flat surface 21b of the first side member 21 may be formed in the second side member 22, and the shortest distance from the second flat portion 22b to the second groove 22a in the width direction may be formed to increase toward the rear of the vehicle.

The first groove 21a and the second groove 22a may be beads formed by beading processing.

Since the second subframe 20 is configured in the shape described above, an axial load is more transferred to the inner side of the vehicle in the width direction in a front portion of the vehicle, thereby providing the effect of offsetting an outer moment of the vehicle in the width direction that occurs in the third subframe 30. However, when it continues in the same cross-section in the longitudinal direction of the vehicle, the axial load continues to act on the inside of the vehicle, which may cause a problem of bending deformation on the inside of the vehicle. Therefore, when it moves relatively to the rear side of the vehicle, as can be seen in the cross-section in the width direction of the vehicle, the first groove 21a may be formed to have a gradually decreasing depth toward the outer side in the width direction of the vehicle, thereby inducing collapse in the axial direction of the second subframe 20 without bending deformation on the inner side.

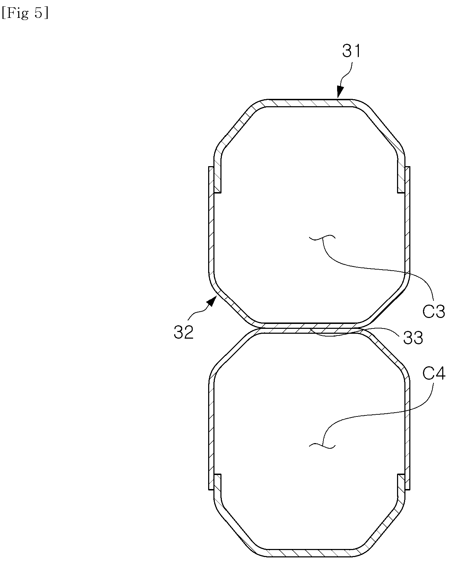

FIGS. 5 to 7 illustrate cross-sections of a third subframe according to an embodiment of the present disclosure, cut in a width direction of a vehicle. FIGS. 5 to 7 illustrate shapes according to each embodiment.

The third subframe 30 according to an embodiment of the present disclosure may have a cross-section including a plurality of closed cross-sections C3 and C4.

In addition, the third subframe 30 may have a polygonal cross-sectional structure which is symmetrical in a height direction of the vehicle.

Since the third subframe 30 forms closed cross-sections C3 and C4, it is possible to reduce the weight while maintaining a certain degree of rigidity. In addition, in deformation, deformation in a specific direction may be induced.

The third subframe 30 may have a polygonal cross-sectional structure which is symmetrical in a height direction of the vehicle. For example, the third subframe 30 may have an octagonal shape. However, the shape of the polygonal structure may vary depending on the design.

The third subframe 30 may have a symmetrical structure vertically based on a certain point.

Since the cross-section of the third subframe 30 has a polygonal structure and forms a shape symmetrical in the height direction of the vehicle, when energy due to a frontal collision is applied to the third subframe 30, rather than causing bending deformation, collapse in an axial direction of the third subframe 30 is induced, the third subframe 30 serves to absorb energy.

Referring to FIG. 5, the third subframe 30 may include a first auxiliary member 31 disposed at an end in the height direction of the vehicle, and a second auxiliary member 32 coupled to the first auxiliary member 31 and having a contact portion 33 formed therein, in contact with at least one surface thereof.

The first auxiliary member 31 is disposed at both ends of the vehicle in the height direction, and a second auxiliary member 32 is provided coupled to the first auxiliary member 31. The first auxiliary member 31 and the second auxiliary member 32 may form a coupling portion in a portion, and for example, the first auxiliary member 31 may be fitted to the second auxiliary member 32, and the first auxiliary member 31 and the second auxiliary member 32 may be coupled by welding, or the like, or may be fixed by a mechanical coupling method such as bolting, or the like.

The second auxiliary member 32 may have a plurality of bent portions formed and a contact portion 33 formed on one surface thereof, so that the second auxiliary members 32 may be coupled symmetrically with respect to the contact portion 33.

The first auxiliary member 31 and the second auxiliary member 32 may be continuous in a longitudinal direction of the vehicle to be coupled to an end plate 70 at a front end of the vehicle, and be connected to a first subframe 10 at the other end thereof.

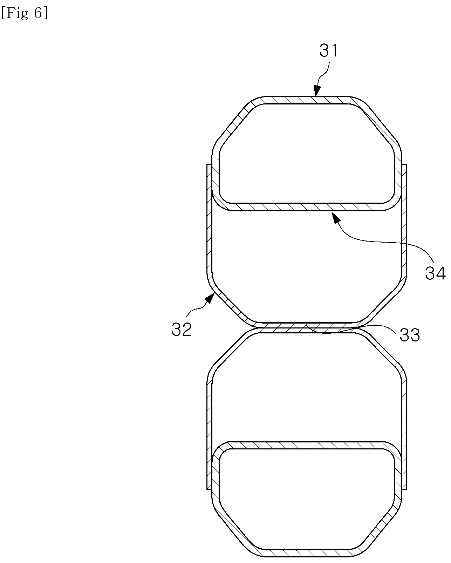

Referring to FIG. 6, the third subframe 30 may further include a reinforcing portion 34 crossing the closed cross-section.

As described above, the first auxiliary member 31 and the second auxiliary member 32 may be coupled to form a closed cross-section therein, and a reinforcing portion 34 crossing the closed cross-section may be further provided.

The reinforcing portion 34 may be formed to cross the closed cross-section in a width direction of the vehicle. By providing the reinforcing portion 34, a closed cross-section formed inside the first subframe 10 is divided, and since the size of the closed cross-section is reduced and a plurality of the closed cross-sections are formed, the effect of increasing a critical load at which bending deformation begins may be provided.

For example, the reinforcing portion 34 may be integrally formed with the first auxiliary member 31.

The first auxiliary member 31 and the reinforcing portion 34 may be integrally formed, so that a smaller number of coupling portions to be coupled to the second auxiliary member 32 may be formed, thereby providing convenience in processing.

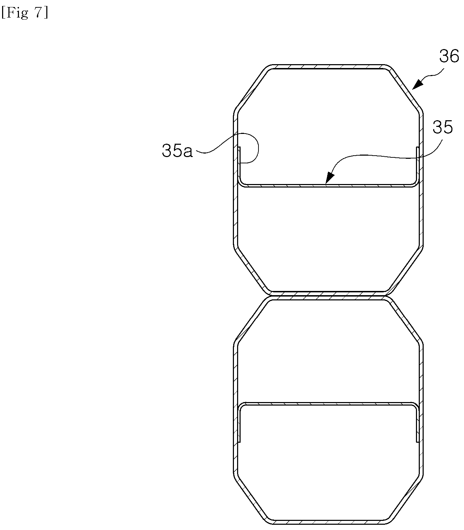

Referring to FIG. 7, the third subframe 30 may include an outer member 36 having a hollow space formed therein and integrally formed.

As another example, the third subframe 30 may be comprised of an outer member 36. The outer member 36 may be processed by extrusion molding, or may also be formed into a single member by bending a single plate material and then coupling the same at both ends thereof.

Even when the single member is formed by an outer member 36, it may be disposed in a symmetrical shape in a height direction of the vehicle, and when a coupling portion formed by bending and then coupling a single plate material, is formed, the coupling portion may be located in a contact portion 33 in which the outer members 36 are in contact with each other.

A reinforcing portion 35 may be formed inside the outer member 36, and the reinforcing portion 35 may be formed to cross an inner closed cross-section of the outer member 36, and may be formed to have a reinforcing flange 35a and may be joined to the outer member 36 in the reinforcing flange 35a.

When the reinforcing flange 35a is joined to an outer member 36 provided at an upper end of the vehicle in the height direction, the reinforcing flange 35a may be disposed to face upwards, and when the reinforcing flange 35a is joined to an outer member 36 provided at a lower end thereof, the reinforcing flange 35a may be disposed to face downwards.

The third subframe 30 may be formed in the shape as described above, so that the effect of effectively absorbing the impact in a forward direction of the vehicle, minimizing the impact transferred to the first subframe 10, and reducing the weight may be provided.

The third subframe 30 is not limited to the shape as described above, and may be variously changed depending on the design.

While example embodiments have been illustrated and described above, it will be apparent to those skilled in the art that modifications and variations could be made without departing from the scope of the present disclosure as defined by the appended claims.

**Description of Reference Numerals**

| | | | |
|---|---|---|---|
| 10: | First subframe | 20: | Second subframe |
| 21: | First side member | 21a: | First groove |
| 22: | Second side member | 22a: | Second groove |
| 30: | Third subframe | 31: | First auxiliary member |
| 32: | Second auxiliary member | 33: | Contact portion |
| 34, 35: | Reinforcing portion | 36: | Outer member |
| 40: | Spring upper sheet | 50: | Mounting bracket |
| 60: | Connection member | 70: | End plate |
| 100: | Battery frame | 200: | Front frame |
| 300: | Rear frame | 400: | Floor |
| 500: | Cross member | 600: | Side sill |

## Claims

1. An electric vehicle body structure, comprising:
a battery frame formed to encompass a battery region that includes batteries; and
a front frame provided on the battery frame at the front side of a vehicle,
wherein the front frame includes
a first subframe connected to the battery frame,
a second subframe branched from the first subframe and inclined outwardly in a width direction of the vehicle; and
a third subframe extending farther than a branch point of the second subframe from the first subframe at the front of the vehicle.

2. The electric vehicle body structure of claim 1, wherein the second subframe and the third subframe are disposed in the same position in a height direction of the vehicle.

3. The electric vehicle body structure of claim 1, wherein a cross-section of the second subframe or the third subframe includes a plurality of closed cross-sections.

4. The electric vehicle body structure of claim 1, wherein the second subframe includes a first side member extending in a longitudinal direction of a vehicle and including a first groove formed in a width direction of the vehicle, and
a second side member extending in the longitudinal direction of the vehicle and coupled to the first side member to form a closed cross-section, and including a second groove formed in the width direction of the vehicle toward the closed cross-section,
wherein the first groove and the second groove are in contact with each other.

5. The electric vehicle body structure of claim 4, wherein the first side member is provided outwardly of the second side member in the width direction,
a first flat portion, parallel to the second side member is formed, and
the shortest distance from the first flat portion to the first groove in the width direction increases toward the front of the vehicle.

6. The electric vehicle body structure of claim 3, wherein the third subframe has a polygonal cross-sectional structure, which is symmetrical in a height direction of the vehicle.

7. The electric vehicle body structure of claim 6, wherein the third subframe further includes a reinforcing portion crossing the closed cross-section.

8. The electric vehicle body structure of claim 6, wherein the third subframe includes
a first auxiliary member disposed at an end of the vehicle in the height direction, and
a second auxiliary member coupled to the first auxiliary member and having a contact portion in contact with at least one surface thereof formed.

9. The electric vehicle body structure of claim 6, wherein the third subframe includes
an outer member having a hollow space formed inside and provided integrally.

10. The electric vehicle body structure of claim 1, further comprising:
a mounting bracket coupled to the first subframe, and
a spring upper sheet coupled to the mounting bracket.

11. The electric vehicle body structure of claim 1, wherein a strength of the first subframe is greater than the strengths of the second subframe and the third subframe, and
a thickness of the first subframe is thicker than thicknesses of the second subframe and the third subframe.
